# EUROPÄISCHE PATENTSCHRIFT

(11) **EP 1 571 562 B1**
(45) Veröffentlichungstag und Bekanntmachung des Hinweises auf die Patenterteilung: **01.11.2017**
(21) Anmeldenummer: 04101406.9
(22) Anmeldetag: 05.04.2004
(51) Int. Cl.: G06F 17/30, H04M 3/493, G06K 19/07

(54) **Verfahren, mit welchem eine Telekommunikationsdienstleistung mittels einer elektronischen Adresse beansprucht werden kann**
Method for ordering a telecommunication service using an electronic address
Méthode pour passer une commande d'un service de télécommunication utilisant une addresse électronique

(30) Priorität: 03.03.2004 EP 04100864; 16.03.2004 EP 04101080; 02.04.2004 EP 04101392
(43) Veröffentlichungstag der Anmeldung: 07.09.2005
(73) Patentinhaber: Swisscom AG, 3050 Bern (CH)
(72) Erfinder: Lauper, Eric, 3014 Bern (CH)
(74) Vertreter: P&TS SA (AG, Ltd.)

(56) Entgegenhaltungen:
- EP-A- 1 054 335
- WO-A-03/107146
- US-B1- 6 611 673

## Beschreibung

Die vorliegende Erfindung betrifft ein Verfahren, mit welchem der Benutzer einesTelekommunikation-Endgerätsfür ein Telekommunikationsnetz eine Telekommunikationsdienstleistung mittels einer elektronischen Adresse beanspruchen kann.

Viele Telekommunikationsdienstleistungen benötigen die Eingabe einer elektronischen Adresse. Um eine telefonische Verbindung aufzubauen, musseine Telefonnummer eingegeben werden; um ein E-Mail zu senden, wird die Adresse des Empfängerseingetippt. Auch der Zugriff auf eine Web-Seite wird über eine URL-Adresse ermöglicht.

Sich an eine elektronische Adresse zu erinnern und die Adresse dann einzutippen ist aufwendig und fehleranfällig. Sehr oft werden die benötigen Adressen in einem lokalen oder fernen Verzeichnisabgelegt, beispielsweise in einem Speicherbereich für Telefonnummern, oder E-Mail-Adressen, oder einem Bookmark-Verwaltungsprogramm für URL.

Neue Adressen müssen jedoch im Verzeichnis eingeschrieben worden sein, bevor sie verwendet werden können. Essind viele verschiedene Verfahren bekannt, um eine neue Adresse automatisch zu lesen und in einem Verzeichnisabzulegen. Beispielsweise sind Barcode-Scanner bekannt, welche als Barcode gedruckte elektronische Adressen lesen und bearbeiten können. Barcodes sind jedoch relativ wenig verbreitet für Adressen und die maximale praktikable Länge der Adresse, die mit gewöhnlichen Barcodescannern lesbar ist, ist begrenzt. Lange URL's sind beispielsweise nur schwer als Barcode einsetzbar.

Essind auch Scanner bekannt, die Visitenkarten scannen können, automatisch in Text konvertieren, und die erkannten Daten in einer Datenbank ablegen. Solche Text-Scanner mit Texterkennungsprogramm sind jedoch relativ teuer und kaum mobil einsetzbar. Vor allem die OCR-Texterkennung ist fehleranfällig und benötigt viel Speicher- und Rechnerkapazität.

Es wurden auch bereits Systeme empfohlen, in welchen eine elektronische Adresse in einem Chip abgelegt wird, die über eine kontaktlose Schnittstelle gelesen wird. Solche Systeme haben jedoch den Nachteil, dass die abgelegte Adresse nur schwierig mit einem RFID-Schreibgerät aktualisiert werden kann und dies nur dann, wenn der Chip wiederbeschreibbar ist. Die Speicherkapazität des Chips ist begrenzt und erlaubt es nicht, Adressen abzulegen, welche aus mehr Bits bestehen als die vorgesehene maximale Anzahl. Wird eine Adresse geändert, müssen alle vorher verbreiteten Chips ersetzt oder aktualisiert werden.

EP10544335 offenbart Verfahren und Systeme zum Steuern von Computern oder zum Verbinden von Internet-Information mit physikalischen und elektronischen Objekten.

US6661673 offenbart eine frequenzgesteuerte Telekommunikationsvorrichtung.

WO03107146 offenbart ein Verfahren, eine Vorrichtung und ein System, um Informationen für einen verbesserten Zugriff über ein drahtloses Kommunikationsnetzwerk zu verwalten.

Es ist ein Ziel der vorliegenden Erfindung, ein neues Verfahren und System anzubieten, mit welchen diese Probleme effizienter gelöst werden können.

Es ist insbesondere ein Ziel der vorliegenden Erfindung, ein neues Verfahren und System anzubieten, mit welchen der Benutzer eines Telekommunikationsnetzes eine Telekommunikationsdienstleistung mittels eines Telekommunikation-Endgeräts und einer elektronischen Adresse beanspruchen kann. Mögliche Dienstleistungen umfassen beispielsweise den Aufbau einer Verbindung mit der angegebenen Adresse, das Ablegen einer elektronischen Adresse in einem Verzeichnis, das Nachladen von einem mit der SIM-Karte verbundenen Konto mit einem Geldbetragswert (vorbezahlte Karte oder mehrmals belastbare Wertkarte), das Sperren beziehungsweise Entsperren von Funktionen entweder im Mobilendgerät 3 oder im Mobilfunknetz 4, eine Zahlungstransaktion mit der elektronischen Adresse, usw.

Es ist auch ein Ziel der vorliegenden Erfindung, ein neues Verfahren und System anzubieten, mit welchen elektronische Adressen effizienter verbreitet, aktualisiert, gelesen und verwendet werden können.

Esist ein anderes Ziel der vorliegenden Erfindung, ein neuesVerfahren und System anzubieten, mit welchen es möglich ist, dass Benutzer eine Adresse unabhängig vom angemeldeten Telekommunikationssystem verwenden können.

Diese Ziele werden insbesondere durch ein Verfahren erreicht, mit welchem ein Telekommunikationsbenutzer eine Telekommunikationsdienstleistung mittels eines Telekommunikation-Endgeräts und einer elektronischen Adresse beanspruchen kann, mit folgenden Verfahrensschritten:
der Telekommunikationsbenutzer lässt einen in einem RFID-Element gespeicherten elektronischen Code mit einem RFID-Lesegerät einlesen,
der benannte elektronische Code wird über ein Telekommunikationsnetz an einen Namen-Dienstserver übertragen,
der benannte Namen-Dienstserver antwortet mit der elektronischen Seitenadresse einer Seite, die dem benannten Code entspricht, und aus welcher die benannte elektronische Adresse extrahiert werden kann,
die gewünschte elektronische Adresse wird dem benannten Telekommunikations-Endgerät zur Verfügung gestellt;
die benannte Telekommunikationsdienstleistung wird beansprucht.

Dies hat den Vorteil, dassdie verwendete elektronische Adresse automatisch in das Telekommunikations-Endgerät geladen wird.

Dies hat auch den Vorteil, dassdie verwendete elektronische Adresse nicht im RFID-Element abgelegt wird, sondern auf einer Seite, die jederzeit einfach aktualisiert werden kann, beispielsweise vom Adressen-Inhaber, und dies auch noch nach der Verbreitung der RFID-Elemente.

Dies hat ausserdem den Vorteil, dassdie Seitenadresse jener Seite, aus welcher die gewünschte elektronische Adresse abgeleitet wird, selbst auseinem Namendienstserver ermittelt wird und somit einfach geändert werden kann, ohne darüber die Benutzer der RFID-Elemente informieren zu müssen. Dies erlaubt beispielsweise, diese Seite bei unterschiedlichen Servern zu beherbergen.

Die Seitenadresse der Seite entspricht dem im RFID-Element 10 gelesenen Code. Die Verknüpfung zwischen dem Code und der elektronischen Seitenadresse ist nicht statisch, sondern wird in einem Namen-Dienstserver registriert. Dies hat den Vorteil, dass Änderungen der Seitenadresse jederzeit möglich und leicht verfolgbar sind. Dies hat auch den Vorteil, dassessich um ein universelles System handelt, in welchem Dienstleistungen ausjedem Mobilgerät in jedem Netz über eine einzige Adresse des Serversbestellt werden können.

Daserfindungsgemässe Verfahren hat ausserdem den Vorteil, dassdie Telekommunikationsdienstleistung beansprucht wird, sobald die elektronische Adresse dem benannten Telekommunikations-Endgerät zur Verfügung gestellt wurde. Esist somit möglich, eine elektronische Adresse mit einem RFID-Lesegerät zu ermitteln und sofort, möglicherweise sogar ohne Intervention des Benutzers, zur Beanspruchung einer Dienstleistung zu verwenden.

Dieses Verfahren ermöglicht einem Benutzer, zum Beispiel einem Mobilteilnehmer, den Beweiszu erbringen, dasser über ein RFID-Element verfügt, mit welchem die Adresse der gewünschten Dienstleistung weitergeleitet werden kann. Da RRD-Elemente schwer kopierbar sind, und da die elektronische Adresse möglicherweise nur auf der fernladbaren Seite verfügbar ist, kann die Verbreitung der elektronischen Adresse und somit der Zugriff auf die Dienstleistung kontrolliert werden, was auch die Scherheit erhöht.

Das RFID-Element kann in ein Tag installiert werden, das mit einem Produkt, beispielsweise, aber nicht ausschliesslich mit einer Visitenkarte, verbunden werden kann. Es ist somit beispielsweise möglich, durch Lesen des Codes im Tag die Telefonnummer oder E-Mail-Adressedes momentan für den Support des Produktszuständigen Sachbearbeiterszu ermitteln und automatisch eine Verbindung mit diesem Sachbearbeiter aufzubauen.

Die vorliegende Erfindung wird im Folgenden anhand der Figuren näher beschrieben. Eszeigen
Fig. 1 ein Blockschaltbild eines Systems mit einem Mobilgerät, einem RFID-Lesegerät und einem RFID.
Fig. 2 die Struktur einer Meldung mit einem Code gemässder Erfindung.
Fig. 3 eine Visitenkarte mit einem RFID-Element gemässder Erfindung.

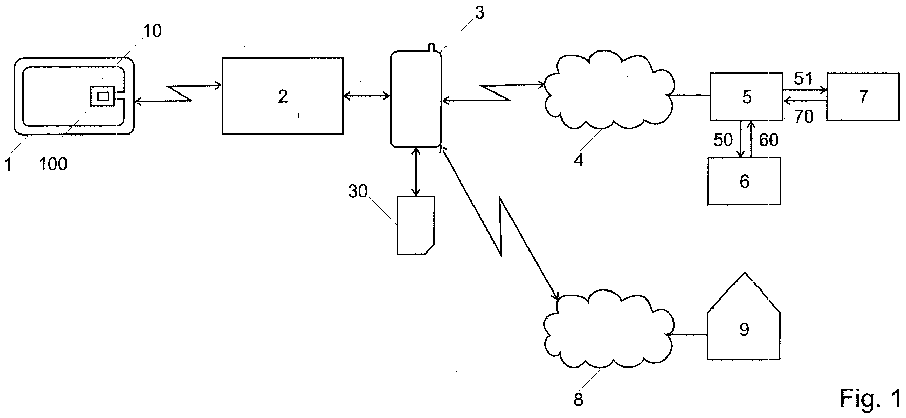

Die Figur 1 zeigt das System, das vom Benutzer (Mobilteilnehmer) verwendet wird, um mit dem erfindungsgemässen Verfahren Dienstleistungen zu bestellen. Ein Mobilgerät 3 (zum Beispiel ein Mobilfunktelefon oder ein PDA mit einer Schnittstelle für ein zellulares Mobilfunknetz) kann Kurzmeldungen (zum Beispiel SMSund USSD) und Daten (zum Beispiel IP-Pakete) auseinem Mobilfunknetz 4 empfangen und an dieses Netz senden. Das Mobilfunknetz 4 ist beispielsweise ein GSM, GPRS, HSCSD, EDGE, UMTSoder CDMA-Netz, über welches auch Daten übermittelt werden können. Das Mobilgerät 3 enthält ein Identifizierungsmodul (zum Beispiel eine SIM-Karte 30), um das Gerät durch das Netz 4 zu identifizieren. Eine oder mehrere Software-Anwendungen können von einem Prozessor im Mobilgerät 3 und/oder in der SIM-Karte 30 ausgeführt werden.

Das Mobilgerät 3 umfasst ausserdem einen RFID-Leseteil 2, oder ist mit einem solchen Leseteil verbunden (beispielsweise über eine USB, Firewire, PCCard, Compactflash, proprietäre, usw, Verbindung, oder über eine Bluetooth oder WLAN-kontaktlose Verbindung). Der Leseteil 2 umfasst einen Mikrokontroller und mindestenseine Antenne oder Spule, um kontaktlos Daten mit RFID-Komponenten in der unmittelbaren Nähe auszutauschen. Die Datenübertragung erfolgt vorzugsweise im Frequenzbereich 13,56MHz, 900MHz und/oder 860-930MHz. Der Leseteil kann vorzugsweise wahlweise in verschiedenen Frequenzbereichen und mit unterschiedlichen RFIDsarbeiten. Die Tragweite beim Lesen der RFIDs beträgt vorzugsweise zwischen 2 und 10 Metern - je nach Orientierung des Leseteils und des RFID-Elements. Die Verbindung erfolgt vorzugsweise im Half-Duplex Modus mit einer ASK Backscatter Modulation.

Das RFID-Element 1 umfasst einen Chip 10 mit einem unlöschbaren permanenten Speicherbereich, in welchem während der Herstellung oder während der Personalisierung des Chips ein Code 100 abgelegt wird. Der Code identifiziert eindeutig jedes bestimmte Produkt 1 ; jedes individuelle Produkt hat vorzugsweise einen anderen Code. Mehrere Produkte können jedoch mit demselben Code 100 markiert werden, wenn esdarum geht, eine Serie von Produkten zu bezeichnen.

Der Code ist vorzugsweise unfälschbar. Der Code-Herausgeber (beispielsweise ein Netzbetreiber) führt eine Tabelle, auf welcher die gültigen, verbrauchten oder verfallenen Codes als solche markiert sind.

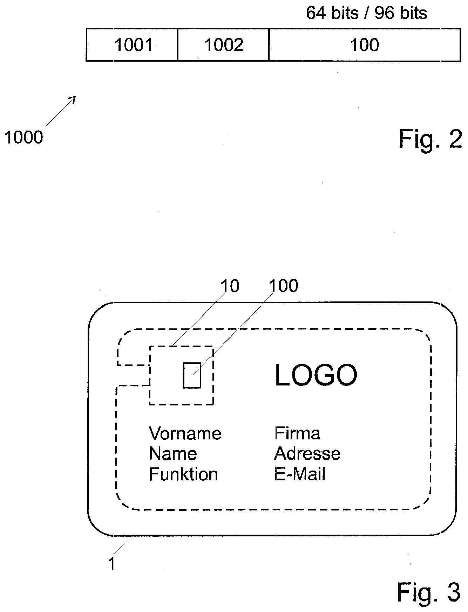

Die Codes 100 umfassen vorzugsweise 64, 96 oder mehr Bitsund sind hierarchisch organisiert. Die Antwort 1000 des RFID-Elements 10 auf eine Anfrage des Leset eils 2 umfasst vorzugsweise einen Vorsatz 1001, Redundante Prüfdaten 1002 und erst dann den Code 100 (Fig. 2). Andere Daten können im Speicherbereich des Chips 10 abgelegt und vom Leseteil gelesen werden.

Codes 100 werden vorzugsweise von einer gemeinsamen Autorität an verschiedene Produkthersteller, Mobilfunknetzanbieter und Mehrwertdienstanbieter verteilt; ein Teil des Codes gibt vorzugsweise die Identität des Produktanbieters an (zum Beispiel die Identität des Mobilfunknetzbetreibers). En Dienstanbieter, welcher Benutzern Dienstleistungen zur Verfügung stellen will, reserviert eine Reihe von Codes bei der gemeinsamen Autorität und speichert einen Teil dieser Codesin RFID-Element 1, die dann verbreitet werden.

Mindestens eine Anwendung ist im Mobilgerät 3 vorgesehen, um Codes 100 in benachbarten RFID-Elementen über den Leseteil 2 zu lesen und um diesen Code über das Mobilfunknetz 4 zu senden. Das Lesen eines Codeswird vorzugsweise vom Mobilgerät 3 und/oder vom Leseteil 2 initiiert; möglich ist beispielsweise, dassdas Mobilgerät stets oder periodisch nach benachbarten RFID-Elementen sucht und in gefundenen RFID-Elementen 10 die vorhandenen Codes liest und bearbeitet oder weiterleitet. In einer anderen, stromsparenden Variante wird das Lesen vom Benutzer des Mobilgeräts 3 und/oder des Leseteils 2 initiiert, der eine entsprechende Anwendung startet oder einen Befehl eingibt, wenn er ein RFID-Element lesen will. Das Lesen der RFID-Elemente mit dem Mobilgerät 3 oder mit einem anderen Gerät kann auch von einer externen Vorrichtung (zum Beispiel einer Verkaufstelle oder einem Automat) über eine Schnittstelle im Nahbereich (zum Beispiel Bluetooth oder WLAN) über das Mobilfunknetz 4, oder über einen Link auf einer besuchten WEB oder WAP-Seite initiiert werden.

Einfache Filter und Bearbeitungsmittel können als Teil der Anwendung im Mobilgerät 3 und/oder im Leseteil 2 vorgesehen werden, um gelesene Codes 100 zu bearbeiten. Die Anwendung kann beispielsweise nur gewisse Bereiche von Codes bearbeiten und weiterleiten. Redundanzprüfungen können auch vorgesehen werden, um nicht plausible und fehlerbehaftete Codeszu löschen. Bereits verwendete Codes werden vorzugsweise in einer Datenbank im Mobilgerät 3 zweckszukünftiger Kontrollen, statistischen Bewertungen und Backups gespeichert.

Je nach Anwendung kann auch ein Passwort oder eine andere Authentifikation verlangt werden, bevor der Code gelesen oder weitergeleitet wird. Das Passwort kann beispielsweise auf einen versteckten, freilegbaren Teil des Produkts 1, beispielsweise eine vorbezahlte Karte oder eine mehrmalsbelastbare Wertkarte, gedruckt werden, oder eswird dem Benutzer über einen anderen Kanal mitgeteilt. Mit der Passwortprüfung kann beispielsweise verhindert werden, dassein unbefugter Dritter mit einem passenden Lesegerät Codes in fremden Produkten liest und verwendet.

In einer Ausführungsform besteht das Passwort auseinem Teil des Codes 100, oder kann mit einer Funktion ausdiesem Code ermittelt werden. DasPasswort kann sich beispielsweise auseiner mit einem öffentlichen Schlüssel prüfbaren Signatur des Codes ergeben. In diesem Fall kann das Passwort ausdem Code nur dann ermittelt werden, wenn der unbefugte Dritte die entsprechende Funktion oder den privaten Signierungsschlüssel kennt. Diese Ausführungsform hat den Vorteil, dassdie Anwendung die Gültigkeit des Passwortes alleine anhand des Codes prüfen kann.

In einer anderen Variante wird die Gültigkeit des Passworts anhand einer Tabelle in der SIM-Karte 30, im Mobilgerät 3 oder im fremden Server geprüft.

In noch einer weiteren Variante wird das Passwort im RFID-Element 10 gespeichert und vom RFID-Element geprüft. Diese Variante erfordert jedoch teure RFID-Elemente, die auch Passwörter speichern, empfangen und vergleichen können.

Eine Anwendung im Mobilgerät kann eine Bestätigung des Benutzersverlangen, bevor der Code weiterbehandelt und die gewünschte Dienstleistung bestellt wird. Diese Bestätigung kann beispielsweise über die Tastatur des Mobilgeräts, PDAs, über andere Engabemittel oder mit einem Sprachbefehl gegeben werden.

Ist das Passwort korrekt und wird die Bestätigung erhalten, wird der gelesene Code 100 von der Anwendung in einer Dienstleistungs-Bestellmeldung (zum Beispiel in einer Kurzmeldung oder vorzugsweise in einem GPRS- oder UMTS-Paket) verpackt und über das Mobilfunknetz 4 an einen Server 5 an eine bekannte Adresse gesendet, vorzugsweise einen Server innerhalb der Infrastruktur des Mobilfunknetzes 4. Die Dienstleistungs-Bestellmeldung wird optional vom Mobilgerät 3 oder von der SIM-Karte 30 signiert und/oder mit einem Zeitstempel versehen.

Der Server 5 verwaltet Dienstleistungs-Bestellmeldungen mit Codes, die von mehreren oder möglicherweise allen RFID-Lesern 2,3 empfangen werden. Andere, komplexere Filter können im Server 5 vorgesehen werden, um Codes aus unterschiedlichen Bereichen verschieden oder gar nicht zu behandeln.

En Passwort kann auch vom Server 5 verlangt werden, damit der Code überhaupt behandelt wird; dieses Passwort kann ähnlich wie im Mobilgerät ausdem Code selbst abgeleitet oder anhand einer Tabelle geprüft werden. Das Passwort wird beispielsweise zusammen mit dem Code 100 in einer Meldung an den Server 5 übertragen.

Der Server 5 kann auch die Identität des Benutzers prüfen. Dies ist umso zuverlässiger, wenn der Server 5 vom Betreiber des Mobilfunknetzes5 verwaltet wird. In diesem Fall kann die Identität des Mobilteilnehmersbeispielsweise anhand der IMSI (International Mobile Subscriber Identity) oder einer anderen Identität in der SIM-Karte zuverlässig ermittelt werden. Gewisse Seitenadressen werden nur gewissen Benutzern zur Verfügung gestellt (beispielsweise Mobilteilnehmer, die über ein entsprechendesAbonnement verfügen, die einen genügenden Saldo auf einem Geldkonto vorweisen, oder deren Profil die Bereitstellung der Dienstleistung erlaubt).

Falls das Passwort falsch ist, oder wenn die gewünschte Dienstleistung auseinem anderen Grund nicht bereitgestellt werden kann, wird vorzugsweise eine Meldung an den Benutzer geschickt (beispielsweise über SMS, USSD, oder Internet). Nach mehreren Fehlversuchen können aus Scherheitsgründen weitere Versuche definitiv oder temporär gesperrt werden. Auf diese Weise kann verhindert werden, dassgültige Codesdurch mehrmalige Versuche erraten werden.

Der Server 5 ist über Internet oder ein Intranet mit einem Namendienstserver 6 verbunden, in welchem für jeden Code eine entsprechende elektronische Adresse einer elektronischen Seite abgelegt ist.

Eine Anfrage 50 mit dem gerade empfangenen Code 100 wird vom Server 5 an den Namen-Dienstserver 6 geleitet, der mit der entsprechenden elektronischen Seitenadresse 60 antwortet. Diese Seitenadresse besteht beispielsweise auseinem URL oder einer anderen Adresse für ein TCP-IP Netz.

Der Namendienstserver 6 kann vom Betreiber des Servers 5 verwaltet werden und/oder von externen Entitäten (beispielsweise von der Organisation, die die Codes 100 an die verschiedenen Firmen verteilt). Mehrere Namendienstserver können miteinander verbunden werden, so dassdie gewünschte Seitenadresse in einem anderen Namendienstserver gesucht wird, wenn sie sich nicht im Server 6 befindet. Dies erlaubt zum Beispiel einem Anbieter auch Codes von anderen Organisationen zu bearbeiten. Ein lokaler Cache 6 ei nes externen Namendienstes kann auch im Server 5 oder in der Domain des Servers 5 vorgesehen werden.

Der Benutzer des Mobilgeräts 3 kann somit alle Codes 100 von allen Dienstleistungsanbietern stetsan den gleichen Zielserver 5, der aus dem Namen-Dienstserver 6 oder dem Netz von Namen-Dienstservern 6 die Adresse der Seite, anhand welcher die gewünschte elektronische Adresse bereitgestellt wird, ermittelt. Die Behandlung der Dienstleistungs-Bestellmeldung ist somit nur vom Code in der Meldung abhängig. Gleiche Meldungen, die an unterschiedliche Server 5 mehrerer Dienstleistungsanbieter gelangen, können somit die Bereitstellung der genau gleichen elektronischen Adresse verursachen.

Die Verknüpfung im Namen-Dienstserver 6 zwischen einem Code 100 und einer Seitenadresse kann vorzugsweise vom Inhaber der Seitenadresse, beispielsweise vom Hersteller des Produkts 1 jederzeit geändert werden (beispielsweise über ein dediziertes WEB-Formular). Dieserlaubt, die elektronische Seitenadresse einer Seite oder eines Domainszu ändern, ohne die Endbenutzer informieren zu müssen.

Die Seitenadresse der gewünschten Seite kann somit eindeutig allein anhand der 64- oder 96-Bits-Codes, die im RFID-Element 10 gespeichert sind, gefunden werden; die Seite, auf welche zugegriffen wird, ist somit völlig unabhängig von der Adresse oder Telefonnummer des Servers 5. Da viele Produkte markiert werden müssen, und da aus Scherheitsgründen nicht alle Codes verwendet werden können, müssen genügend frei verfügbare Bitsfür die Codes vorgesehen werden, einfache IP-Nummern zum Beispiel, würden möglicherweise nicht ausreichen, da sehr viele mögliche Kombinationen bereitszugeteilt worden sind. Eswird vorzugsweise ein anderes, selbständiges Seiten-Adressierungssystem verwendet.

Der Server 5 empfängt die Antwort 60 vom Namendienstserver 6 mit der gewünschten Seitenadresse und greift auf die entsprechende Seite im Server 7 zu, oder auf ein Netz mit mehreren lokalen oder fernen Servern (Anfrage 51 und Antwort 70 auf Figur 1).

In einer Variante ergibt sich die Seitenadresse der gewünschten Seite auseiner Kombination der vom Namen-Dienstserver 6 angegebenen Adresse mit einem oder mehreren Bits des Codes 100. In diesem Fall entspricht die Adresse im Namendienstserver 6 einem Bereich, in welchem die individuellen Seiten bestimmten Teilen der Codes entsprechen. Dies hat den Vorteil, dassder Namen-Dienstserver einfacher gestaltet werden kann.

In einer Variante umfasst die Seite im Server 7, auf welche der Server 5 zugreift, nur ein Feld mit der gewünschten elektronischen Adresse, die dem Mobilgerät 3 übermittelt wird.

In einer bevorzugten Variante umfasst die Seite im Server 7 einen Hypertext-Inhalt in einer Markup Sprache. In einer Variante umfasst diese Seite einen XML-Inhalt (eXtended Markup Language). In einer anderen Variante umfasst die Seite einen PML-Inhalt (Product Marking Language). Mindestensein mit einem Markup Tag gekennzeichnetes Feld auf der Seite enthält die gewünschte Adresse; eskönnen auch mehrere Adressen in einem oder mehreren Feldern mit Tagsauf einer Seite vorhanden sein.

Die Seite kann auch SOAP-Protokol (Simple Object Access Protocol), .NET- Framework oder andere Web-Dienste unterstützen, anhand welchen der Server 5 und schlussendlich das Mobilgerät 3 auf die gewünschten Daten und Objekte zugreifen kann. Diese mit dem WEB-Dienst zur Verfügung gestellten Daten und Objekte enthalten in diesem Fall die gewünschte elektronische Adresse oder die gewünschten elektronischen Adressen.

Die Seite auf dem Server 7 kann auch fernladbare Computer-Objekte umfassen, die Daten und ein entsprechendes Programmelement enthalten. Die im Objekt verfügbaren Codes umfassen in diesem Fall die gewünschte elektronische Adresse oder Adressen. Das Programmelement kann vom Mobilgerät 3 durchgeführt werden, um diese elektronische Adresse zu verwalten. Das Programmelement kann beispielsweise ein Dialogprogramm-Element ausführen, mit welchem eine von mehreren angebotenen elektronischen Adressen und Kommunikationskanäle gewählt werden können. In einer bevorzugten Variante enthält das Programmelement Java-Appletsoder von einem Symbian-Betriebssystem ausführbare Programmportionen.

Der Server 5 lädt die gewünschte Seite ausdem Server 7 fern, und/oder greift auf den gewünschten Inhalt zu, oder auf einem Teil dieses Inhalts. Die Seite bzw. der Inhalt wird über das Mobilfunknetz 4 auf das Mobilgerät 3 übertragen.

Das Mobilgerät 3 empfängt die vom Server 7 fernladbare Seite mit einer oder mehreren elektronischen Adressen, oder mit einem Objekt in welchem diese Adresse enthalten ist. Die elektronische Adresse wird dann ausder Seite oder ausdem Objekt extrahiert, beispielsweise mit einem .XML oder .PML Browser oder Parser, oder mit dem im Objekt enthaltenen Programm oder Applet.

In einer ersten Variante wird automatisch (ohne Intervention des Benutzers) eine Telekommunikationsdienstleistung mit dieser Adresse bereitgestellt. Möglich ist beispielsweise, dassdiese elektronische Adresse automatisch im Adressenverzeichnis des Mobilgeräts 3 oder der SIM-Karte 30 abgelegt wird und/oder dassautomatisch eine Verbindung über das Telekommunikationsnetz 8 mit dem Endgerät 9 zu dieser Zieladresse 9 aufgebaut wird. DasTelekommunikationsnetz 8 kann je nach Typ von Adresse ein geschaltetes Netz sein, beispielsweise ein mobil oder festes Sprach- oder Datennetz, beispielsweise ein zellulares Mobilfunknetz oder das Internet.

Die Verbindung ist vorzugsweise vom Typ der Adresse abhängig; entspricht die Adresse einer Telefonnummer, wird beispielsweise eine Telefonverbindung automatisch oder nach Bestätigung aufgebaut. Entspricht diese Adresse einer E-Mail Adresse, wird ein E-Mail vorbereitet, welches möglicherweise auch einen Standardinhalt (der ausder Seite im Server 7 ferngeladen wird) enthalten kann, etwa um ein Produkt automatisch zu bestellen oder um eine Zahlungstransaktion mit dieser Adresse automatisch durchzuführen. Die elektronische Adresse kann auch dem URL einer Web- oder WAP-Seite entsprechen, wasdie Anzeige dieser Seite mit einem entsprechenden Browser verursachen wird.

In einer anderen Variante wird die Telekommunikationsdienstleistung mit der ermittelten elektronischen Adresse nur nach einer Intervention des Benutzers bereitgestellt. Im einfachsten Fall besteht die Intervention des Benutzersnur auseiner Bestätigung nach einer Aufforderungsmeldung. In einer anderen Ausführungsform wird der Benutzer aufgefordert, einen bestimmten Kommunikationskanal auszuwählen, um beispielsweise zu entscheiden, ob eine Fax- oder eine telefonische Verbindung aufzubauen ist, fallsdiesnicht eindeutig ausdem fernladbaren XML-Inhalt hervorgeht. Möglich ist auch, dassder Benutzer eingibt, welche von mehreren auf einer Seite verfügbaren Adressen desgleichen (oder von unterschiedlichen) bestimmten Typs er verwenden will, welche Telekommunikationsdienstleistung er beanspruchen will, und welchen Inhalt oder welche Parameter er für diese Dienstleistung verwendet.

Esist im Rahmen der Erfindung auch möglich, dassdie elektronische Adresse, die an das Mobilgerät 3 gesendet wird, einen elektronischen Schlüssel oder ein Zertifikat umfasst. Dieser Schlüssel kann beispielsweise verwendet werden, um die Identität des Benutzers des Mobilgerätszu beweisen, oder um zu beweisen, dasser über einen bestimmten Token verfügt; er kann verwendet werden, um andere Dienstleistungen (beispielsweise über eine kontaktlose Schnittstelle im Nahbereich) in einem lokalen Netz oder mit Ferngeräten freizuschalten.

Die Figur 3 zeigt eine Ausführungsform der Erfindung, in welcher das RFID-Element 10 in einer Visitenkarte 1 installiert wird. Diese elektronische Visitenkarte kann von einem Mobilgerät 3 gelesen werden, um auf eine Seite im Server 7 zugreifen zu können, aus welcher alle Parameter der Visitenkarte 1 ferngeladen werden. Eine automatische telefonische Verbindung mit der auf der Karte aufgedruckten Nummer ist auch durch das blosse Lesen der RFID-Elemente möglich.

Die ausder Seite im Server 7 gewünschte fernladbare Adresse ist vorzugsweise auf das Produkt 1 gedruckt, möglicherweise mit einem Hinweisoder einem Logo. Möglich ist beispielsweise, dassein spezielles Logo neben einer Telefonnummer auf der Visitenkarte oder auf einem Produkt 1 steht, damit der Benutzer weiss, dasser automatisch diese Telefonnummer wählen kann, indem der Code im Chip 10 im Produkt 1 gelesen und gesendet wird.

Daserfindungsgemässe Verfahren kann vorteilhaft eingesetzt werden, um die E-Mail-Adresse, die Telefonnummer, die Faxnummer und/oder die Web-Adresse des Supportdienstsfür ein Produkt einfacher zu ermitteln, zu laden und zu verwenden. Da die Codes 100 im RFID-Element 10 jedes individuelle Produkt 1 einesbestimmten Typs individuell kennzeichnen, kann für jeden Benutzer und Erwerber eines gleichen Produktseine andere elektronische Adresse zugeteilt werden; diese Adresse kann vom Kaufdatum, Ablaufdatum der Garantie, Erwerbsdatum, gültiger Supportvertrag, Benutzersprache, Benutzerprofil, frühere Geschichte und Interventionen mit diesem Produkt, usw, abhängig sein. Diese elektronischen Adressen sind ausserdem auf einer Seite in einem Server 7, der möglicherweise vom Produkthersteller verwaltet werden kann, so dasssie jederzeit geändert werden können. Auch die Adresse der Seite im Server 7 kann jederzeit durch eine einfache Änderung im Namendienstserver geändert werden. DasVerfahren erlaubt somit den Benutzern eine individuelle und aktuelle elektronische Adresse des zuständigen Supportbearbeiters zu ermitteln und zu verwenden.

## Patentansprüche

1. Verfahren, mit welchem ein Telekommunikationsbenutzer eine Telekommunikationsdienstleistung mittels eines Telekommunikation-Endgeräts und einer elektronischen Adresse beansprucht, mit folgenden Verfahrensschritten:
der Telekommunikationsbenutzer lässt einen in einem RFID-Element (10) gespeicherten elektronischen Code (100) mit einem RFID-Lesegerät (2) einlesen,
der benannte elektronische Code (100) wird über ein Telekommunikationsnetz (4) an einen Namen-Dienstserver (6) übertragen,
die benannte elektronische Adresse wird ermittelt und dem benannten Telekommunikations-Endgerät (3) zur Verfügung gestellt;
die benannte Telekommunikationsdienstleistung wird auf der Basis der benannten elektronischen Adresse beansprucht;
**gekennzeichnet durch** die weiteren Verfahrensschritte:
der benannte Namen-Dienstserver (6) antwortet mit der elektronischen Seitenadresse einer fernladbaren Seite, wobei die elektronische Seitenadresse mit dem benannten Code in dem Namen-Dienstserver (6) verknüpft ist,
die benannte elektronische Adresse wird mit der elektronischen Seitenadresse ermittelt,
wobei ein Passwort verlangt wird, damit der Code (100) an den Namen-Dienstserver (6) übertragen wird oder damit der Code (100) behandelt wird, wobei das Passwort aus einem Teil des Codes (100) besteht oder mit einer Funktion aus diesem Code (100) ermittelbar ist.

2. Das Verfahren des Anspruchs 1, in welchem der benannte elektronische Code (100) an einen Server (5) gesendet wird, in welchem sich der Server (5) in der Infrastruktur des Telekommunikationsnetzes (4) befindet und der Server (5) den Code an den Namendienstserver (6) weiterleitet,
und in welchem sich der benannte Namen-Dienstserver (6) ausserhalb der Infrastruktur des Telekommunikationsnetzes (4) befindet und für mehrere Netzbetreiber zugänglich ist.

3. Das Verfahren eines der Ansprüche 1 oder 2, in welchem die benannte Seite einen Hypertext-Inhalt in einer Markup Language umfasst.

4. Das Verfahren eines der Ansprüche 1 bis 3, in welchem die benannte elektronische Adresse der elektronischen Adresse eines Ziel-Endgeräts (9) in einem geschalteten Netzwerk (8) oder in einem Packetorientierten Netzwerk entspricht.

5. Das Verfahren eines der Ansprüche 1 bis 4, in welchem die benannte Seite nur die benannte elektronische Adresse umfasst.

6. Das Verfahren eines der Ansprüche 3 bis 4, in welchem die benannte elektronische Adresse als XML- oder PML-Feld auf der benannten Seite markiert ist und vom benannten Telekommunikations-Endgerät ausgesondert wird.

7. Das Verfahren eines der Ansprüche 1 bis 4, in welchem die benannte elektronische Adresse durch einen WEB-Dienst zur Verfügung gestellt wird.

8. Das Verfahren eines der Ansprüche 1 bis 7, in welchem die benannte Telekommunikationsdienstleistung den Aufbau einer Verbindung zwischen dem benannten Telekommunikations-Endgerät (3) und einem Ziel-Endgerät (9) mit der benannten elektronischen Adresse umfasst.

9. Das Verfahren eines der Ansprüche 1 bis 8, in welchem die benannte Telekommunikationsdienstleistung die Einspeicherung der benannten elektronischen Adresse in einem Verzeichnis umfasst.

10. Das Verfahren eines der Ansprüche 1 bis 7, in welchem die benannte Telekommunikationsdienstleistung den Zugriff auf eine Hypertext-Seite an der benannten elektronischen Adresse umfasst.

11. Das Verfahren eines der Ansprüche 1 bis 7, in welchem die benannte Telekommunikationsdienstleistung eine Zahlungstransaktion mit jener Entität umfasst, welche der benannten elektronischen Adresse zugeteilt ist.

12. Das Verfahren eines der Ansprüche 1 bis 11, in welchem die benannte Telekommunikationsdienstleistung ohne Intervention des benannten Benutzers nach dem Einlesen des benannten Codes beansprucht wird.

13. Das Verfahren eines der Ansprüche 1 bis 11, in welchem die benannte Telekommunikationsdienstleistung erst nach Bestätigung des benannten Benutzers nach dem Einlesen des benannten Codes beansprucht wird und, in welchem eine Software-Anwendung im benannten Telekommunikationsendgerät den benannten Benutzer auffordert, die benannte Bestätigung einzugeben.

14. Das Verfahren des Anspruchs 13, in welchem die benannte Software-Anwendung den Benutzer auffordert, unter mehreren möglichen Telekommunikationsdienstleistungen mit der benannten elektronischen Adresse Eine auszuwählen.

15. Das Verfahren eines der Ansprüche 13 oder 14, in welchem die benannte Software-Anwendung den Benutzer auffordert, unter mehreren verfügbaren elektronischen Adressen Eine auszuwählen, in welchem die benannte Software-Anwendung aus der benannten Seite ferngeladen wird oder in welchem die benannte elektronische Adresse in ein Objekt verpackt wird, welches auch ein Programm zur Beanspruchung der benannten Telekommunikationsdienstleistung umfasst.

16. Das Verfahren eines der Ansprüche 1 bis 15, in welchem jeder benannte Code (100) auf manuelle Initiative des benannten Telekommunikationsbenutzers initiiert wird.

17. Das Verfahren eines der Ansprüche 1 bis 16, in welchem das benannte RFID-Lesegerät (2) Teil eines Mobilfunktelefons (3) ist und in welchem Verfahren der benannte Code durch eine Software-Anwendung im benannten Mobilfunktelefon (3) verpackt und an den benannten Server (5) übertragen wird.

18. Das Verfahren gemäss Anspruch 17, in welchem die benannte Telekommunikationsdienstleistung vom benannten Mobilfunktelefons (3) beansprucht wird.

19. Das Verfahren eines der Ansprüche 1 bis 18, in welchem sich das Passwort aus einer mit einem öffentlichen Schlüssel prüfbaren Signatur ergibt und das Passwort nur dann ermittelt wird, wenn die entsprechende Funktion oder der private Signierungsschlüssel bekannt sind.

20. Das Verfahren eines der Ansprüche 1 bis 19, in welchem der benannte elektronische Code (100) an einen Server (5) gesendet wird, wobei sich der Server (5) in der Infrastruktur des Telekommunikationsnetzes (4) befindet, wobei vom Server (5) ein Passwort verlangt wird, damit der Code (100) behandelt wird.

21. Das Verfahren gemäss Anspruch 20, in welchem das Passwort des Servers (5) aus dem Code selbst abgeleitet oder anhand einer Tabelle geprüft wird.

22. Das Verfahren gemäss Anspruch 20 oder 21, in welchem das Passwort zusammen mit dem Code (100) in einer Meldung an den Server (5) übertragen wird.

23. Das Verfahren gemäss einem der Ansprüche 1 bis 22, in welchem nur gewisse Bereiche von Codes (100) bearbeitet und weiterleitet werden und Redundanzprüfungen vorgesehen werden, um fehlerhafte und nicht plausible Codes zu löschen.

24. System zur Beanspruchung einer Telekommunikationsdienstleistung mit folgenden Komponenten:
Ein Produkt (1) mit einem RFID-Element (10), in welchem mindestens ein Code (100) abgelegt ist;
ein Telekommunikation-Endgerät (3)
zum Einlesen des in dem RFID-Element (10) abgelegten Codes (100) mit einem RFID-Lesegerät (2),
zum Übertragen des benannten elektronischen Codes (100) über ein Telekommunikationsnetz (4) an einen Namen-Dienstserver (6), und
zum Empfangen einer elektronischen Adresse zur Beanspruchung einer Dienstleistung;
den Namen-Dienstserver (6), in welchem der benannte Code (100) mit einer entsprechenden elektronischen Seitenadresse einer fernladbaren Seite in einem paketorientierten Netz registriert ist, zum Ermitteln der elektronischen Seitenadresse; und
eine fernladbare Seite, die über die elektronische Seitenadresse über das paketorientierte Netz erreichbar ist, und in welcher die elektronische Adresse als Markup Feld angegeben ist,
wobei ein Teil des Codes (100) ein Passwort ist oder ein Passwort aus diesem Code (100) ermittelbar ist, das zum Übertragen des Codes (100) an den Namen-Dienstserver (6) oder zur Behandlung des Codes (100) verlangbar ist.

25. Das System des Anspruchs 24, in welchem sich das Passwort aus einer mit einem öffentlichen Schlüssel prüfbaren Signatur ergibt und das Passwort nur dann ermittelbar ist, wenn die entsprechende Funktion oder der private Signierungsschlüssel bekannt sind.

26. Das System eines der Ansprüche 24 oder 25, mit einem Server (5) der sich in der Infrastruktur des Telekommunikationsnetzes (4) befindet, an welchem der benannte elektronische Code (100) gesendet wird, wobei vom Server (5) das Passwort verlangt wird, damit der Code (100) behandelt wird.

27. Das System eines der Ansprüche 24 bis 26, mit mindestens einem mit einem Mobilgerät (3) verbundenen RFID-Leser (2), der ausgebildet ist, den benannten Code (100) zu lesen, wobei das benannte Mobilgerät (3) eine Anwendung umfasst, um die benannte Seitenadresse, die einem Code entspricht, zu ermitteln, und um eine elektronische Adresse aus der benannten Seite zu extrahieren.

28. Das System eines der Ansprüche 24 bis 27, wobei die fernladbare Seite auf einem weiteren Server liegt.

29. Das Verfahren eines der Ansprüche 1 bis 23, wobei die fernladbare Seite auf einem weiteren Server liegt.

## Claims

1. Method with which a telecommunication user accesses a telecommunications service by means of a telecommunication terminal and an electronic address, with the following method steps:
the telecommunication user reads an electronic code (100) stored in a RFID element (1) with a RFID reader device (2),
said electronic code (100) is transmitted over a telecommunication network (4) to a name service-server (6),
said electronic address is retrieved and supplied to said telecommunication terminal (3);
said telecommunication service is accessed on the basis of said electronic address;
**characterized by** the further method steps:
said name service-server (6) replies with the electronic page address of a remote page, wherein said electronic page address is linked to said code in the name service-server (6),
said electronic address is determined with the electronic page address,
wherein a password is requested such that the code (100) is transmitted to the name service-server (6) or that the code (100) is treated, wherein the password consists of a part of the code (100) or is retrieved with a function from said code (100).

2. The method of claim 1, wherein said electronic code (100) is sent to a server (5), wherein the server (5) is located in the infrastructure of the telecommunication network (4) and forwards the code to the name service-server (6),
and wherein said name service-server (6) is located outside the infrastructure of the telecommunication network (4) and is accessible to several network operators.

3. The method of one of the claims 1 or 2, wherein said page includes a hypertext content in a markup language.

4. The method of one of the claims 1 to 3, wherein said electronic address corresponds to the electronic address of a target terminal (9) in a switched network (8) or in a packet-oriented network.

5. The method of one of the claims 1 to 4, wherein said page includes only said electronic address.

6. The method of one of the claims 3 to 4, wherein said electronic address is marked as XML or PML field on said page and is sorted out by said telecommunications terminal.

7. The method of one of the claims 1 to 4, wherein said electronic address is made available through a WEB service.

8. The method of one of the claims 1 to 7, wherein said telecommunications service includes establishing a connection between said telecommunications terminal (3) and a target terminal (9) with said electronic address.

9. The method of one of the claims 1 to 8, wherein said telecommunications service includes storing said electronic address in a directory.

10. The method of one of the claims 1 to 7, wherein said telecommunications service includes access to a hypertext page at said electronic address.

11. The method of one of the claims 1 to 7, wherein said telecommunications service comprises a payment transaction with the entity to which said electronic address has been allocated.

12. The method according to one of the claims 1 to 11, wherein said telecommunications service is accessed without intervention of said user after said code has been read.

13. The method of one of the claims 1 to 11, wherein said telecommunications service is accessed only after confirmation of said user after said code has been read, and wherein a software application in said telecommunications terminal invites said user to enter said confirmation.

14. The method of claim 13, wherein said software application invites the user to select one from several possible telecommunications services with said electronic address.

15. The method of one of the claims 13 to 14, wherein said software application invites the user to select one of several available electronic addresses, wherein said software application is downloaded from said page, or wherein said electronic address is packed in an object that also includes a program for accessing said telecommunications service.

16. The method of one of the claims 1 to 15, wherein each said code (100) is initiated on the manual initiative of said telecommunication user.

17. The method according to one of the claims 1 to 16, wherein said RFID reader device (2) is part of a mobile radio telephone (3), wherein said code is packed by a software application in said mobile radio telephone (3) and transmitted to said server (5).

18. The method of claim 17, wherein said telecommunications service is accessed by said mobile device (3).

19. The method of one of claims 1 to 18, wherein the password results from a signature which is checkable by a public key, and the password is only determined, if the corresponding function or the private signature key is known.

20. The method of one of the claims 1 to 19, wherein said electronic code (100) is sent to a server (5), wherein the server (5) is located in the infrastructure of the telecommunications network (4), wherein a password is requested by the server (5) such that the code (100) is treated.

21. The method according to claim 20, wherein the password of the server (5) is retrieved from the code or is checked on the basis of a table.

22. The method according to claim 20 or 21, wherein the password is transmitted together with the code (100) in a notification to the server (5).

23. The method according to one of claims 1 to 22, wherein only specific parts of codes (100) are treated and transmitted, and redundancy checks are foreseen in order to cancel erroneous and non-logical codes.

24. System for accessing a telecommunication service with the following components:
a product with an RFID element (1) in which at least one code (100) is stored,
a telecommunication terminal (3)
for reading an electronic code (100) stored in a RFID element (1) with a RFID reader device (2),
for transmitting said electronic code (100) over a telecommunication network (4) to a name service-server (6),
for receiving an electronic address for accessing a service;
the name service-server (6) in which the code (100) is registered with a corresponding page address of a downloadable page in a packet-oriented network for determining the electronic page address; and
a page accessible over said page address through the packet-oriented network and wherein the electronic address is indicated as mark-up field,
wherein a part of the code (100) is a password or a password is retrievable from said code (100) which can be requested for transmitting the code (100) to the name service-server (6) or for treating the code (100).

25. The system of claim 24, wherein the password results from a signature which is can be checked by a public key, and the password is only determined, if the corresponding function or the private signature key is known.

26. The system of one of claims 24 to 25, with a server (5)
which is located in the infrastructure of the telecommunications network (4)
to which said electronic code (100) is sent, wherein a password is requested by the server (5) such that the code (100) is treated.

27. The system of one of the claims 24 to 26, with at least one RFID reader device (2) connected with a mobile device (3) and capable of reading said code (100), said mobile device (3) including an application for determining said page address corresponding to a code (100) and for extracting an electronic address from said page.

28. The system according to one of claims 24 to 27, wherein the page is located on a further server.

29. The method according to one of claims 1 to 23, wherein the page is located on a further server.

## Revendications

1. Procédé par lequel un utilisateur de télécommunications requiert un service de télécommunication au moyen d'un terminal de télécommunication et d'une adresse électronique, comprenant les étapes suivantes:
l'utilisateur de télécommunications fait lire un code électronique (100) stocké dans un élément RFID (10) au moyen d'un lecteur RFID (2),
ledit code électronique (100) est transmis par l'intermédiaire d'un réseau de télécommunications (4) à un serveur de services de noms (6),
ladite adresse électronique est déterminée et mise à disposition dudit terminal de télécommunications (3) ;
ledit service de télécommunication est utilisé sur la base de ladite adresse électronique ;
**caractérisé par** les étapes de procédé suivantes :
ledit serveur de services de noms (6) répond avec l'adresse de page électronique d'une page téléchargeable, l'adresse de page électronique étant liée audit code dans le serveur de services de noms (6),
ladite adresse électronique est déterminée avec l'adresse de page électronique,
un mot de passe étant exigé pour que le code (100) soit transmis au serveur de services de noms (6) ou pour que le code (100) soit traité, le mot de passe étant constitué d'une partie du code (100) ou pouvant être déterminé par une fonction à partir de ce code (100).

2. Procédé selon la revendication 1, dans lequel ledit code électronique (100) est envoyé à un serveur (5), dans lequel le serveur (5) se trouve dans l'infrastructure du réseau de télécommunications (4) et transmet le code au serveur de services de noms (6),
et dans lequel ledit serveur de services de noms (6) se trouve à l'extérieur de l'infrastructure du réseau de télécommunications (4) et est accessible à une pluralité d'opérateurs de réseau.

3. Procédé selon l'une des revendications 1 ou 2, dans lequel ladite page comprend un contenu hypertexte dans un langage de balisage.

4. Procédé selon l'une des revendications 1 à 3, dans lequel ladite adresse électronique correspond à l'adresse électronique d'un terminal de destination (9) dans un réseau commuté (8) ou dans un réseau orienté paquets.

5. Procédé selon l'une des revendications 1 à 4, dans lequel ladite page comprend seulement ladite adresse électronique.

6. Procédé selon l'une des revendications 3 à 4, dans lequel ladite adresse électronique est marqué comme champ XML ou PML sur ladite page et est séparée dudit terminal de télécommunication.

7. Procédé selon l'une des revendications 1 à 4, dans lequel ladite adresse électronique est mise à disposition par un service web.

8. Procédé selon l'une des revendications 1 à 7, dans lequel ledit service de télécommunication comprend l'établissement d'une connexion entre ledit terminal de télécommunication (3) et un terminal de destination (9) avec ladite adresse électronique.

9. Procédé selon l'une des revendications 1 à 8, dans lequel ledit service de télécommunication comprend le stockage de ladite adresse électronique dans un registre.

10. Procédé selon l'une des revendications 1 à 7, dans lequel ledit service de télécommunication comprend l'accès à une page hypertexte à ladite adresse électronique.

11. Procédé selon l'une des revendications 1 à 7, dans lequel ledit service de télécommunication comprend une opération de paiement avec l'entité qui est associée à ladite adresse électronique.

12. Procédé selon l'une des revendications 1 à 11, dans lequel ledit service de télécommunication est utilisé sans intervention dudit utilisateur après la lecture dudit code.

13. Procédé selon l'une des revendications 1 à 11, dans lequel ledit service de télécommunication est utilisé seulement après confirmation dudit utilisateur après la lecture dudit code, et dans lequel une application logicielle dans ledit terminal de télécommunication invite ledit utilisateur à introduire ladite confirmation.

14. Procédé selon la revendication 13, dans lequel ladite application logicielle invite l'utilisateur à sélectionner un parmi plusieurs services de télécommunication possibles avec ladite adresse électronique.

15. Procédé selon l'une des revendications 13 ou 14, dans lequel ladite application logicielle appelée invite l'utilisateur à sélectionner une parmi une pluralité d'adresses électroniques disponibles, dans lequel ladite application logicielle est téléchargée depuis ladite page ou dans lequel ladite adresse électronique est paquetée dans un objet qui comprend également un programme pour utiliser ledit service de télécommunications.

16. Procédé selon l'une des revendications 1 à 15, dans lequel chacun desdits codes (100) est initié sur initiative manuelle de l'utilisateur dudit service de télécommunication.

17. Procédé selon l'une des revendications 1 à 16, dans lequel ledit lecteur RFID (2) fait partie d'un téléphone mobile (3) et dans lequel procédé ledit code est paqueté par une application logicielle dans ledit téléphone mobile (3) et transmis audit serveur (5).

18. Procédé selon la revendication 17, dans lequel ledit service de télécommunication est utilisé par ledit téléphone mobile (3).

19. Procédé selon l'une des revendications 1 à 18, dans lequel le mot de passe résulte d'une signature vérifiable avec une clé publique et le mot de passe n'est déterminé que lorsque la fonction correspondante ou la clé de signature privée est connue.

20. Procédé selon l'une des revendications 1 à 19, dans lequel ledit code électronique (100) est envoyé à un serveur (5), le serveur (5) se trouvant dans l'infrastructure du réseau de télécommunications (4), un mot de passe étant exigé par le serveur (5) pour traiter ainsi le code (100).

21. Procédé selon la revendication 20, dans lequel le mot de passe du serveur (5) est dérivé du code lui-même ou est vérifié sur la base d'un tableau.

22. Procédé selon la revendication 20 ou 21, dans lequel le mot de passe est transmis avec le code (100) dans un message au serveur (5).

23. Procédé selon l'une des revendications 1 à 22, dans lequel seulement certaines zones de codes (100) sont traitées et transmises, et des contrôles à redondance sont prévus pour supprimer des codes erronés ou pas plausibles.

24. Système pour l'utilisation d'un service de télécommunication avec les composants suivants:
un produit (1) ayant un élément RFID (10) dans lequel au moins un code (100) est stocké ;
un terminal de télécommunication (3)
pour lire le code (100) stocké dans l'élément RFID (10) au moyen d'un lecteur RFID (2),
pour transmettre ledit code électronique (100) par l'intermédiaire d'un réseau de télécommunications (4) un serveur de services de noms (6), et
pour recevoir une adresse électronique pour utiliser un service ;
le serveur de services de noms (6), dans lequel ledit code (100) est enregistré avec une adresse de page électronique correspondante d'une page téléchargeable dans un réseau orienté paquets, pour déterminer l'adresse de page électronique ; et
une page téléchargeable, qui peut être atteinte par le biais de l'adresse de page électronique par l'intermédiaire du réseau orienté paquets, et dans laquelle l'adresse électronique est indiquée comme champ de balisage,
une partie du code (100) étant un mot de passe ou un mot de passe pouvant être déterminé à partir de ce code (100), qui peut être exigé pour transmettre le code (100) au serveur de services de noms (6) ou pour traiter le code (100).

25. Système selon la revendication 24, dans lequel le mot de passe résulte d'une signature vérifiable avec une clé publique et le mot de passe n'est déterminé que lorsque la fonction correspondante ou la clé de signature privée est connue.

26. Système selon l'une des revendications 24 ou 25, avec un serveur (5) qui se trouve dans l'infrastructure du réseau de télécommunications (4), auquel ledit code électronique (100) est envoyé, le mot de passe étant exigé par le serveur (5) pour que le code (100) soit traité.

27. Système selon l'une des revendications 24 à 26, avec un moins un lecteur RFID (2) lié à l'appareil mobile (3), qui est agencé pour lire ledit code (100), ledit appareil mobile (3) comprenant une application pour déterminer ladite adresse de page correspondant à un code et pour extraire une adresse électronique à partir de ladite page.

28. Système selon l'une des revendications 24 à 27, dans lequel la page téléchargeable se trouve sur un autre serveur.

29. Procédé selon l'une des revendications 1 à 23, dans lequel la page téléchargeable se trouve sur un autre serveur.
